# EUROPÄISCHE PATENTANMELDUNG

(11) **EP 1 890 012 A1**
(43) Veröffentlichungstag der Anmeldung: **20.02.2008**
(21) Anmeldenummer: 06016865.5
(22) Anmeldetag: 11.08.2006
(51) Int. Cl.: F01D 21/00, F01D 17/20, F02C 9/28

(54) **Verfahren zum Betreiben einer Turbine**

(71) Anmelder: SIEMENS AKTIENGESELLSCHAFT, 80333 München (DE)
(72) Erfinder: Beck, Ernst, 45468 Mülheim a.d. Ruhr (DE); Fricke, Karsten, 58313 Herdecke (DE); Goede, Dirk, 04824 Beucha (DE); Grewe, Claus, 45359 Essen (DE); Meuser, Andreas, 56479 Westernohe (DE); Scheer, Germann, 50374 Erftstadt (DE); Thölking, Heinrich, 49377 Vechta (DE); Zenker, Markus, 40589 Düsseldorf (DE)

(57) **Zusammenfassung**

Ein Verfahren zum Betreiben einer Gasturbine (10) mit mindestens einem Messumformer (18, 20) zum Ermitteln mindestens einer Messgröße an der Gasturbine (10) umfasst erfindungsgemäß die Schritte: Durchführen (22) einer Wartungsarbeit, von der der mindestens eine Messumformer (18, 20) betroffen ist, Durchführen (24) einer Plausibilitätsprüfung mindestens einer von dem Messumformer (18, 20) vor oder bei einem nachfolgenden Betrieb der Gasturbine (10) ermittelten Messgröße und Steuern (26) des Betriebs der Gasturbine (10) in Abhängigkeit des Ergebnisses der Plausibilitätsprüfung der von dem mindestens einen Messumformer (18, 20) ermittelten Messgröße.

## Beschreibung

Die Erfindung betrifft ein Verfahren zum Betreiben einer Gasturbine mit mindestens einem Messumformer zum Ermitteln mindestens einer Messgröße an der Gasturbine.

Bei Gasturbinen des Standes der Technik können sich nach dem Durchführen von Wartungsarbeiten, von denen Messumformer betroffen sind, unzulässige bzw. kritische Betriebsarten der Gasturbine ergeben, beispielsweise weil es während der Wartungsarbeiten zu einer fehlerhaften Kalibrierung des Messumformers gekommen ist.

Um derartige unzulässige bzw. kritische Betriebsarten von Gasturbinen auszuschließen und um auch allgemein die Prozesssicherheit von Messungen von Messumformern an Gasturbinen zu erhöhen, ist es bekannt, Messumformer redundant auszuführen.

Es ist eine Aufgabe der vorliegenden Erfindung ein Verfahren zum Betreiben einer Gasturbine mit mindestens einem Messumformer zum Ermitteln mindestens einer Messgröße an der Gasturbine zu schaffen, bei welchem oben genannte unzulässige bzw. kritische Betriebsarten auf kostengünstige Weise vermieden sind.

Die Aufgabe ist erfindungsgemäß mit einem Verfahren gemäß Anspruch 1 gelöst. Vorteilhafte Weiterbildungen der Erfindung sind in den abhängigen Ansprüchen beschrieben.

Gemäß der Erfindung ist ein Verfahren zum Betreiben einer Gasturbine mit mindestens einem Messumformer zum Ermitteln mindestens einer Messgröße an der Gasturbine geschaffen, welches die folgenden Schritte umfasst: Durchführen einer Wartungsarbeit, von der der mindestens eine Messumformer betroffen ist, Durchführen einer Plausibilitätsprüfung mindestens einer von dem Messumformer vor oder bei einem nachfolgenden Betrieb der Gasturbine ermittelten Messgröße und Steuern des Betriebs der Gasturbine in Abhängigkeit des Ergebnisses der Plausibilitätsprüfung der von dem mindestens einem Messumformer ermittelten Messgröße.

Erfindungsgemäß ist es vorgesehen insbesondere nach einer Rekalibrierung oder ähnlichem an einem Messumformer eine Kontrolle der Messungen vor und/oder während des Starts der zugehörigen Gasturbine durchzuführen. Bei der Kontrolle der Messungen werden diese auf Plausibilität beobachtet. Diese erfindungsgemäße Plausibilitätsprüfung wird insbesondere an einer redundanten Verdichterenddruck-Messungen an Gasturbinen durchgeführt. Während bei bekannten Gasturbinen es möglich war, dass beide ermittelten Messgrößen einer Verdichterenddruck-Messung nach einer Kalibrierung noch über eine Handabsperrung von einer Wirkdruckleitung abgekoppelten waren, ist eine derartiger Fehler aufgrund der erfindungsgemäßen Plausibilitätsprüfung nicht möglich.

Bei der erfindungsgemäßen Plausibilitätsprüfung wird insbesondere bevorzugt geprüft, ob vor einem Betrieb der Gasturbine von dem Messumformer bereits ein Messwert für die Messgröße ermittelt wird, welcher über einen festgelegten Grenzwert liegt. Dabei wird insbesondere bevorzugt eine Freigabe für einen Gasturbinenstart verweigert, wenn bei Stillstand oder Drehvorrichtungsbetrieb (d. h. ein Betrieb unter einer vordefinierten Drehzahl) ein nennenswerter Verdichterenddruck bei beiden Messungen von zwei redundanten Messumformern einer Verdichterenddruck-Messung ermittelt werden. Eine derartige Messungen würde auf einen Defekt oder einen eingesperrten Druck beider Messumformer hinweisen.

Ferner ist es erfindungsgemäß bevorzugt bei der Plausibilitätsprüfung darauf zu achten, ob bei dem Betrieb der Gasturbine von dem Messumformer ein Messwert für die Messgröße ermittelt wird, welcher unter einem festgelegten Grenzwert liegt. Dabei wird erfindungsgemäß insbesondere geprüft, ob bei einer vordefinierten Drehzahl, welche höher als eine bestimmte Drehzahlgrenze ist, kein nennenswerter Druck bei beiden Messumformern einer redundanten Verdichterenddruck-Messung erkannt wird. Bei Erkennen einer derartigen unplausiblen Messung erfolgt ein sofortiger Startabbruch der zugehörigen Gasturbine. Aus den genannten Gründen wird erfindungsgemäß bevorzugt während eines Starts einer Gastrubine darauf geachtet, ob beim Betrieb der Gasturbine unter einer vorbestimmten Drehzahl der mindestens eine Messumformer einen Verdichterenddruck von mehr als ca. 2,5 bar absolut anzeigt.

Ferner ist es bevorzugt die Gasturbine nicht weiter zu betreiben, wenn bei dem Betrieb der Gasturbine über einer vorbestimmten Drehzahl der mindestens eine Messumformer einen Verdichterenddruck von weniger als ca. 2,3 bar absolut anzeigt.

Erfindungsgemäß werden möglichst einfache und eindeutige Kriterien für eine relevante Messung bestimmt und diese nachfolgend insbesondere elektronisch überwacht. Mit den Kriterien wird besonders bevorzugt im Stillstand oder frühzeitig im Betrieb einer Komponente der Gasturbine ein Fehler erkannt. Dieses erfindungsgemäße Vorgehen wird insbesondere auf jene Messungen angewandt, die zu unzulässigen und/oder kritischen Betriebszuständen der Komponente der Gasturbine führen könnten.

Auf diese Weise werden erfindungsgemäß Handhabungs- oder Bedienfehler bei Wartungsarbeiten an Messumformern automatisch erkannt. Dies geschieht, bevor kritische Zustände erreicht werden, indem eine Störung des mindestens einen Messumformers erkannt wird, noch bevor diese zu einem kritischen Zustand der zugehörigen Komponente der Gastrubine führen könnte.

Nachfolgend wird ein Ausführungsbeispiel eines erfindungsgemäßen Verfahrens zum Betreiben einer Gasturbine anhand der beigefügten schematischen Zeichnungen näher erläutert. Es zeigt:
- Fig. 1: eine stark vereinfachte Ansicht einer Gasturbine, welche gemäß dem erfindungsgemäßen Verfahren betrieben wird und
- Fig. 2: ein Ablaufdiagramm des erfindungsgemäßen Verfahrens zum Betreiben einer Gasturbine.

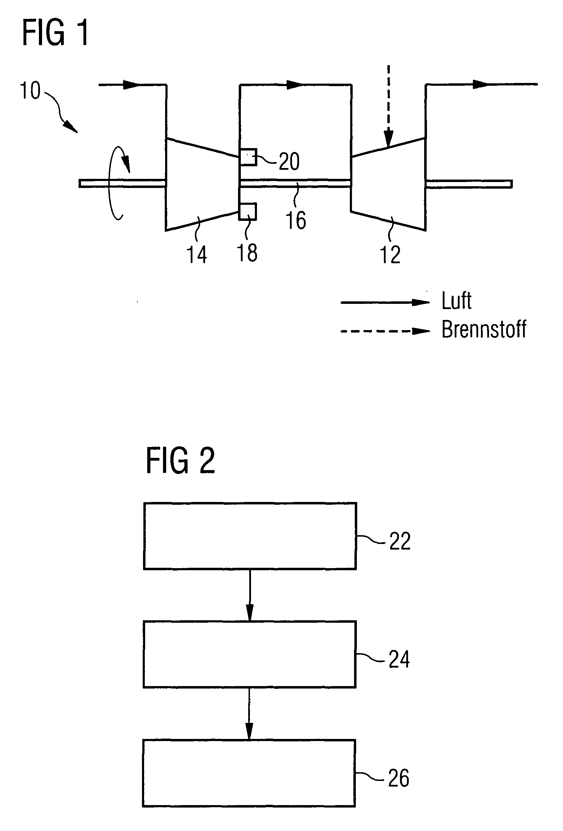

In Fig. 1 ist eine Gasturbine 10 veranschaulicht bei der einer Brennkammer 12 ein von einem Verdichter 14 vorverdichtetes gasförmiges Medium in Form von Luft zugeführt wird, um in der Brennkammer 12 einen gasförmigen Brennstoff zu verbrennen und auf diese Weise an einem Rotor 16 der Gasturbine 10 eine Drehbewegung zu erzeugen.

Am druckseitigen Ende des Verdichters 14 sind zwei Messumformer 18 und 20 angeordnet, welche als Messgrößen den Verdichterenddruck redundant überwachen.

In Fig. 2 ist das Verfahren zum Betreiben der Gasturbine 10 mit den beiden Messumformern 18 und 20 zum Ermitteln der Messgrößen des Verdichterenddruckes an dem Verdichter 14 der Gasturbine 10 veranschaulicht. Das Verfahren umfasst einen Schritt 22, bei dem an dem Verdichter 14 der Gasturbine 10 eine Wartungsarbeit durchgeführt wird, von der mindestens einer der beiden Messumformer 18 und 20 betroffen ist. Eine derartige Wartungsarbeit ist beispielsweise ein Rekalibrieren von einem der Messumformer 18 oder 20.

Dem Schritt 22 folgt eine Schritt 24, bei dem von dem rekalibrierten Messumformer vor oder bei einem nachfolgenden Betrieb der Gastrubine 10 eine Plausibilitätsprüfung der ermittelten Messgröße Verdichterenddruck durchgeführt wird.

Nachfolgend wird in einem Schritt 26 der Betrieb der Gasturbine 10 in Abhängigkeit des Ergebnisses der Plausibilitätsprüfung der von dem Messumformer 18 und/oder 20 ermittelten Messgrößen Verdichterenddruck gesteuert.

## Patentansprüche

1. Verfahren zum Betreiben einer Gasturbine (10) mit mindestens einem Messumformer (18, 20) zum Ermitteln mindestens einer Messgröße an der Gasturbine (10) mit den Schritten:
- Durchführen (22) einer Wartungsarbeit, von der der mindestens eine Messumformer (18, 20) betroffen ist,
- Durchführen (24) einer Plausibilitätsprüfung mindestens einer von dem Messumformer (18, 20) vor oder bei einem nachfolgenden Betrieb der Gasturbine (10) ermittelten Messgröße und
- Steuern (26) des Betriebs der Gasturbine (10) in Abhängigkeit des Ergebnisses der Plausibilitätsprüfung der von dem mindestens einen Messumformer (18, 20) ermittelten Messgröße.

2. Verfahren nach Anspruch 1, bei dem bei der Plausibilitätsprüfung geprüft wird, ob vor einem Betrieb der Gasturbine (10) von dem Messumformer (18, 20) bereits ein Messwert für die Messgröße ermittelt wird, welcher über einem festgelegten Grenzwert liegt.

3. Verfahren nach Anspruch 1 oder 2, bei dem bei der Plausibilitätsprüfung geprüft wird, ob bei dem Betrieb der Gasturbine von dem Messumformer (18, 20) ein Messwert für die Messgröße ermittelt wird, welcher unter einem festgelegten Grenzwert liegt.

4. Verfahren nach einem der Ansprüche 1 bis 3, bei dem der mindestens eine Messumformer (18, 20) einer von zwei Messumformern (18, 20) einer redundanten Verdichterenddruck-Messung ist.

5. Verfahren nach Anspruch 4, bei dem die Gasturbine (10) nicht gestartet wird, wenn bei einem Betrieb der Gasturbine (10) unter einer vorbestimmten Drehzahl der mindestens eine Messumformer (18, 20) einen Verdichterenddruck von mehr als cirka 2,5 bar absolut anzeigt.

6. Verfahren nach Anspruch 4 oder 5, bei dem die Gasturbine (10) nicht weiter betrieben wird, wenn bei dem Betrieb der Gasturbine (10) über einer vorbestimmten Drehzahl der mindestens eine Messumformer (18, 20) einen Verdichterenddruck von weniger als cirka 2,3 bar absolut anzeigt.

7. Verfahren nach einem der Ansprüche 1 bis 6, bei dem die Wartungsarbeit ein Kalibrieren des mindestens einen Messumformers (18, 20) umfasst.
